## Europäisches Patentamt

## European Patent Office

## Office européen des brevets

(19)

(11) Veröffentlichungsnummer: **0 065 167**
A2

(12) # EUROPÄISCHE PATENTANMELDUNG

(21) Anmeldenummer: 82103752.0

(22) Anmeldetag: 03.05.82

(51) Int. Cl.³: **G 01 N 27/46**, G 01 N 33/18

(30) Priorität: **14.05.81 DE 3119188**

(43) Veröffentlichungstag der Anmeldung: **24.11.82**
**Patentblatt 82/47**

(84) Benannte Vertragsstaaten: **AT BE DE FR GB LU NL**

(71) Anmelder: **CILLICHEMIE Ernst Vogelmann GmbH & Co.,**
**Bottwarbahnstrasse 70, D-7100 Heilbronn (DE)**

(72) Erfinder: **Weller, Horst, Lerchenstrasse 19,**
**D-7107 Neckarsulm (DE)**

(74) Vertreter: **Patentanwälte Dr. Ing. Eugen Maier Dr. Ing.**
**Eckhard Wolf, Pischekstrasse 19, D-7000 Stuttgart 1 (DE)**

(54) **Messzelle für die amperometrische Messung des Gehalts an oxidierenden Desinfektionsmitteln in Wasser.**

(57) Die Meßzelle für die amperometrische Messung des Gehalts an oxidierenden Desinfektionsmitteln, wie Chlor, Brom oder Ozon, in Wasser enthält einen von unten nach oben von dem Meßwasser durchströmten Durchflußkanal, in dem zwei ein galvanisches Element bildende Elektroden (12, 22) angeordnet sind. Bei Vorhandensein eines Oxidationsmittels in dem Wasser liefert die Zelle einen elektrischen Strom, der proportional zur Konzentration des Oxidationsmittels ist. Im Durchflußkanal der Meßzelle befindet sich Quarzsand (54), der von dem strömenden Meßwasser so mitgenommen wird, daß er im Bereich der Elektroden (12, 22) zirkuliert und diese von Ablagerungen, die die Messung verfälschen könnten, frei hält. Der Durchflußkanal weist eintrittsseitig einen unterhalb des Elektrodenzwischenraums befindlichen Kanalbereich (42) mit kleinerem Strömungsquerschnitt auf, der im Stillstand die gesamte Sandmenge aufnimmt. Die Arbeitselektrode (22) ist an einem den Durchflußkanal an seiner Oberseite verschließenden, abnehmbaren Verschluß- und Zentrierorgan (16) angeordnet. Sie weist eine zylindrische stabförmige Gestalt auf und greift durch eine mit dem oberen Verschluß- und Zentrierorgan (16) verbundene Isolierhülse (18) hindurch axial verschiebbar in den durch die Gegenelektrode (12) begrenzten Kanalbereich (44) ein.

ACTORUM AG

## Beschreibung

Die Erfindung betrifft eine Meßzelle für die amperometrische Messung des Gehalts an oxidierenden Desinfektionsmitteln, wie Chlor, Brom oder Ozon in Wasser, der im Oberbegriff des Anspruchs 1 angegebenen Gattung.

Die Desinfektion von Trink-, Brauch- und Badewasser erfolgt heute überwiegend durch die Zugabe von Chlor, Chlorverbindungen, Brom oder Ozon. Hierbei kommt es vor allem auf die richtige Dosierung an. Denn bei zu geringer Konzentration ist der Desinfektionserfolg in Frage gestellt, während bei zu hoher Konzentration Geschmacks- und Geruchsbeeinträchtigungen sowie Rohrleitungsschäden auftreten können. Mit Meßzellen der genannten Art ist es möglich, die Konzentration von Oxidationsmitteln in Wasser kontinuierlich zu bestimmen und mit geeigneten Zusatzgeräten anzuzeigen, zu registrieren und zu regeln. Die als Meßwertgeber dienende Meßzelle ist ein galvanisches Element, dessen Arbeitselektrode und Gegenelektrode aus besonders ausgewählten Metallen, wie Platin bzw. Kupfer bestehen. Das durch dieses Element geleitete Meßwasser dient als Elektrolyt. Sofern im Wasser keine oxidierenden Bestandteile enthalten sind, ist das Element polarisiert und liefert nur einen relativ kleinen Reststrom. Sind dagegen Oxidationsmittel vorhanden, so wird das Element depolarisiert und gibt einen elektrischen Strom ab, der proportional zur Konzentration des Oxidationsmittels ist. Der in der Meßzelle befindliche Quarzsand wird von dem durchströmenden Wasser aufgewirbelt und sorgt so dafür, daß sich an den Elektrodenoberflächen keine Ablagerungen bilden, die die Messung verfälschen könnten.

Es ist eine Meßzelle dieser Art bekannt, bei der die aus Platin oder platiniertem Titan bestehende Arbeitselektrode als Spirale an einem von unten in eine Paßöffnung des Geräts einführbaren Stöpsel angeordnet ist. Die Gegenelektrode ist konzentrisch um die Platinelektrode im Durchflußkanal angeordnet. Das Meßwasser wird im Bereich der Elektroden in Umfangsrichtung zugeführt. Durch das einströmende Wasser wird der im Ruhezustand in den Elektrodenbereich absinkende Sand in den darüber befindlichen Bereich mit größerem Strömungsquerschnitt hochgehoben, so daß er während des Betriebs nicht die volle Reinigungswirkung an den Elektroden entfalten kann. Die spiralige Arbeitselektrode ist federnd an dem genannten Stöpsel befestigt, so daß insbesondere bei unsachgemäßer Handhabung die Gefahr besteht, daß die Spirale verformt wird und es dabei zu einem Kurzschluß mit der Gegenelektrode und zu einer Verfälschung der Meßergebnisse kommt. Da der die Arbeitselektrode tragende Stöpsel gleichzeitig als unteres Verschlußorgan der Meßzelle dient, fällt der Quarzsand beim Herausziehen des Stöpsels und Entnehmen der Arbeitselektrode nach unten heraus. Dies ist zwar erwünscht, wenn der Sand tatsächlich ausgetauscht werden soll. Häufig muß der Stöpsel jedoch lediglich zu Reinigungszwecken entfernt werden, ohne daß der Sand entnommen werden soll.

Der Erfindung liegt daher die Aufgabe zugrunde, die bekannte Meßzelle der eingangs angegebenen Art dahingehend zu verbessern, daß der im Durchflußkanal befindliche Quarzsand während des Betriebs im Elektrodenbereich seine optimale Reinigungswirkung entfaltet und sich beim Stillstand in der Meßzelle in einem Bereich außerhalb des Elektrodenraums befindet, so daß der Elektrodenraum von außen her frei zugänglich ist.

Zur Lösung dieser Aufgabe wird die im  Anspruch 1 angegebene Merkmalskombination vorgeschlagen. Weitere vorteilhafte Ausgestaltungen und Weiterbildungen der Erfindung ergeben sich aus den Unteransprüchen.

Die Erfindung geht einmal von dem Gedanken aus, daß sich in dem unterhalb des Elektrodenraums befindlichen Kanalbereich während des Stillstands die gesamte Quarzsandmenge sammelt, so daß der Elektrodenraum sandfrei ist, ohne daß der Sand unnötig abgelassen werden muß. Da der Strömungsquerschnitt in diesem Kanalbereich kleiner als im Elektrodenraum ist, wird der Quarzsand von dem ankommenden Meßwasser aufgrund der dort auftretenden hohen Strömungsgeschwindigkeit nahezu vollständig in den darüber befindlichen
Elektrodenraum mitgenommen und kann dort durch eine geeignete Veränderung des Strömungsquerschnitts im darüber
befindlichen Raum so zirkulieren, daß er seine optimale
Reinigungswirkung entfaltet.

Gemäß einer bevorzugten Ausgestaltung der Erfindung ist
die Arbeitselektrode an einem den Durchflußkanal an seiner
Oberseite verschließenden, abnehmbaren Verschluß- und
Zentrierorgan angeordnet. Damit kann die Platinelektrode
leicht von oben her ausgebaut werden, so daß beim Reinigen,
Austauschen, Überprüfen und Neueinstellen der Elektroden
der Sand nicht nach unten herausfällt.

Um die wirksame Oberfläche der Arbeitselektrode beispielsweise zu Justierungs- und Eichzwecken variieren zu können,
weist die Arbeitselektrode zweckmäßig eine zylindrische
stabförmige Gestalt auf und greift durch eine mit dem
oberen Verschluß- und Zentrierorgan verbundene oder an
diesem angeformte Isolierhülse hindurch axial verschiebbar
in den durch die Gegenelektrode begrenzten Kanalbereich
axialsymmetrisch ein.

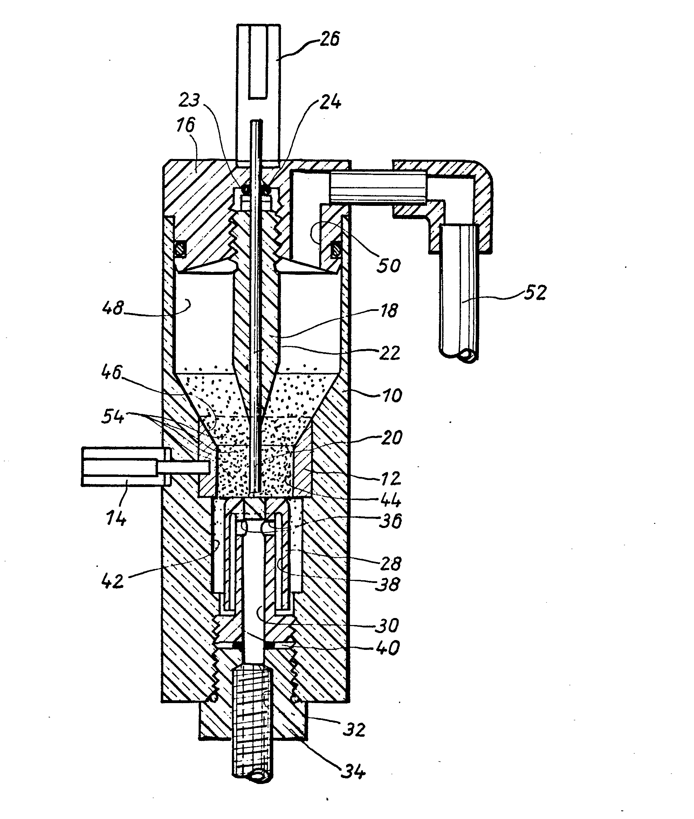

Im folgenden wird die Erfindung anhand der Zeichnung
näher erläutert. Die einzige Figur zeigt ein bevorzugtes
Ausführungsbeispiel der erfindungsgemäßen Meßzelle

A 12 539
22.4.1981
f - kt

in senkrecht geschnittener Darstellung.

Die Meßzelle enthält ein rohrförmiges zylindrisches Gehäuse 10 aus durchsichtigem Kunststoff oder Kunstglas, an dessen Innenfläche etwa auf halber Höhe eine ringförmige Elektrode, die sogenannte Gegenelektrode 12 aus Kupfer, eingepaßt ist. Der Elektrodenanschluß 14 ist senkrecht durch den Gehäusemantel hindurch nach außen geführt. Am oberen Ende ist das Gehäuse 10 durch ein abnehmbares stopfenförmiges Verschluß- und Zentrierorgan 16 verschlossen. Auf seiner Innenseite weist das Verschluß- und Zentrierorgan 16 eine axial nach unten in das Gehäuse 10 eingreifende Isolierhülse 18 auf, durch die hindurch von außen her eine mit ihrem unteren Ende 20 axialsymmetrisch in den Bereich innerhalb der Ringelektrode 12 eingreifende stabförmige Elektrode, die sogenannte Arbeitselektrode 22, aus Platin oder platiniertem Titan hindurchgesteckt ist. Zu Eich- und Justierungszwecken kann die Arbeitselektrode 22 unter Veränderung der Eintauchtiefe und damit der effektiven Elektrodenoberfläche axial verschoben werden. Die Elektrode wird mit Hilfe eines O-Rings 23 am Verschluß- und Zentrierorgan 16 dadurch festgelegt, daß dieser beim Eindrehen der Isolierhülse 18 in die Aussparung 24 eingedrückt und dabei radial gegen die Oberfläche des Elektrodenstabs 22 gepreßt wird. Der Elektrodenstab 22 steht an der Oberseite etwas über das Verschluß- und Zentrierorgan 16 über und ist dort mit einer Anschlußklemme 26 versehen.

A 12 539
22.4.1981
f - kt

Er kann durch einfaches Umdrehen an beiden Enden als Elektrode verwendet werden.

An der Unterseite ist in das Gehäuse 10 eine syphonartig ausgebildete Umlenkhülse 28 eingesetzt, deren zentraler Kanal 30 von unten her durch eine Zentralbohrung 32 in dem unteren Verschlußorgan 34 hindurch mit dem ankommenden Meßwasser beaufschlagbar ist. Das Wasser gelangt von dort über die Querbohrungen 36 in den wieder nach unten führenden Ringkanal 38 zu der ringförmigen Austrittsöffnung 40 und schließlich in einen wieder nach oben führenden Ringbereich 42 des Durchflußkanals der Meßzelle, bevor es zum Elektrodenzwischenraum 44 gelangt. Dort strömt das Wasser an den Elektroden 12,22 vorbei über den sich konisch erweiternden Teil 46 zu der zylindrischen Entspannungskammer 48 des Durchflußkanals und tritt dann über eine Bohrung 50 im oberen Verschluß- und Zentrierorgan 16 und ein Abflußrohr 52 aus der Meßzelle aus.

Im Inneren der Meßzelle befindet sich Quarzsand 54 einer bestimmten Korngröße, der von dem von unten nach oben strömenden Meßwasser so mitgenommen wird, daß er im Bereich der Elektroden 12,22 ständig zirkuliert und diese von Ablagerungen und Verunreinigungen frei hält. Der Strömungsquerschnitt innerhalb der Meßzelle nimmt von unten nach oben so zu, daß während des Betriebs sich der überwiegende Teil des Quarzsandes im Elektrodenzwischenraum 44 befindet, ohne nach unten in den Ringbereich 42 zu fallen oder nach außen ausgeschwemmt zu
werden. Dies wird bei dem bevorzugten Ausführungsbeispiel
dadurch gewährleistet, daß während des stationären Betriebs die Strömungsgeschwindigkeit im Ringbereich 42
etwa 260 m/h, im Elektrodenzwischenraum 44 etwa 90 m/h
und in der darüberliegenden Entspannungskammer 48 weniger
als 20 m/h beträgt. Andererseits ist das Volumen des
Ringkanals 42 so bemessen, daß darin bei Stillstand der
gesamte Sand aufgenommen wird. Dadurch wird erreicht,
daß die Gegenelektrode 12 bei abgenommenen Verschluß-
und Zentrierorgan 16 von außen her zu Wartungs- und
Reinigungszwecken frei zugänglich ist. Da hierzu das
untere Verschlußorgan 34 nicht abgenommen werden muß,
kann der Quarzsand bei den meisten Wartungen, die ohne
Sandaustausch an Ort und Stelle vorgenommen werden können,
in der Meßzelle verbleiben.

0065167

DR.-ING. EUGEN MAIER    DR.-ING. ECKHARD WOLF

PATENTANWÄLTE

ZUGELASSENE VERTRETER VOR DEM EUROPÄISCHEN PATENTAMT

TELEFON: (0711) 24 27 61/2
TELEGRAMME: MENTOR

7 STUTTGART 1, PISCHEKSTR. 19

DRESDNER BANK AG
STUTTGART NR. 1 920 534
POSTSCHECK STGT. 25200-709

A 12 539
22.4.1981
- 9 -
f - kt

CILLICHEMIE
Ernst Vogelmann GmbH & Co.

Bottwarbahnstr. 70

7100   Heilbronn

---

Meßzelle für die amperometrische Messung des
Gehalts an oxidierenden Desinfektionsmitteln in Wasser

---

A n s p r ü c h e

1. Meßzelle für die amperometrische Messung des Gehalts
an oxidierenden Desinfektionsmitteln, wie Chlor, Brom oder
Ozon, in Wasser, mit einem im wesentlichen senkrecht
von unten nach oben von dem Wasser durchströmten Durchflußkanal, mit je einer in dem Durchflußkanal angeordneten, durch einen definierten Zwischenraum voneinander getrennten, vorzugsweise zueinander konzentrischen
Arbeitselektrode (22), beispielsweise aus Platin, und
Gegenelektrode (12), beispielsweise aus Kupfer, mit
von dem strömenden Wasser im Durchflußkanal zumindest
im Bereich der Elektroden aufwirbelbarem Quarzsand (54)
und mit einem den Durchflußkanal an der Unterseite verschließenden, abnehmbaren Verschlußorgan (34),

d a d u r c h   g e k e n n z e i c h n e t ,   daß der Durchflußkanal eintrittseitig in einem unterhalb der Elektroden (12,14) befindlichen, einen kleineren Strömungs-querschnitt als der Elektrodenzwischenraum (44) bildenden, im nichtdurchströmten Zustand die gesamte Quarzsandmenge (54) aufnehmenden Kanalbereich (42) mit dem Wasser beaufschlagbar ist.

2. Meßzelle nach Anspruch 1, d a d u r c h   g e k e n n - z e i c h n e t ,   daß der eintrittsseitige Kanalbereich einen Ringraum (42) bildet, der an seiner Unterseite über eine an einer zentral von unten her in den Kanal unter Freilassung des Ringraums (42) eingreifenden, syphonartig ausgebildeten Umlenkhülse (28) angeordneten Ringöffnung (40) mit dem Wasser beaufschlagbar ist.

3. Meßzelle nach Anspruch 2, d a d u r c h   g e k e n n - z e i c h n e t ,   daß die Umlenkhülse (28) eintrittseitig über einen durch das untere Verschlußorgan (34) hindurchgeführten Kanal (32) axial von unten her mit dem Wasser beaufschlagbar ist.

4. Meßzelle für die amperometrische Messung des Gehalts an freien Desinfektionsmitteln, wie Chlor, Brom oder Ozon, in Wasser, mit einem im wesentlichen senkrecht von unten nach oben von dem Wasser durchströmten Durchflußkanal,

A 12 539
22.4.1981
f - kt

- 11 -

mit je einer in dem Durchflußkanal angeordneten, durch einen definierten Zwischenraum voneinander getrennten, vorzugsweise zueinander konzentrischen Arbeitselektrode (22), beispielsweise aus Platin, und Gegenelektrode (12), beispielsweise aus Kupfer, mit von dem strömenden Wasser im Durchflußkanal zumindest im Bereich der Elektroden aufwirbelbarem Quarzsand (54) und mit einem den Durchflußkanal an der Unterseite verschließenden, abnehmbaren Verschlußorgan, insbesondere nach einem der Ansprüche 1 bis 3, d a d u r c h   g e k e n n z e i c h n e t , daß die Arbeitselektrode (22) an einem den Durchflußkanal an seiner Oberseite verschließenden, abnehmbaren Verschluß- und Zentrierorgan (16) angeordnet ist.

5. Meßzelle nach Anspruch 4, d a d u r c h   g e k e n n -z e i c h n e t , daß die Arbeitselektrode (22) stabförmig ausgebildet ist und durch eine mit dem oberen Verschluß- und Zentrierorgan (16) verbundene oder an diesem angeformte Isolierhülse (18) hindurch axial verschiebbar in den durch die Gegenelektrode (12) begrenzten Kanalbereich (44) konzentrisch eingreift.

6. Meßzelle nach Anspruch 5, d a d u r c h   g e k e n n -z e i c h n e t , daß der die Arbeitselektrode (22) bildende zylindrische Stab an beiden Enden als Elektrode verwendbar ist.

- 12 -

7. Meßzelle nach einem der Ansprüche 4 bis 6, d a d u r c h

g e k e n n z e i c h n e t , daß der durch die Gegenelektrode (12) begrenzte Kanalbereich (44,46) nach oben hin konisch erweitert und bei abgenommenen oberem Verschluß- und Zentrierorgan (16) von oben her zugänglich ist.

Firma Cillichemie Ernst Vogelmann GmbH.& Co. 7100 Heilbronn
Patentanwälte Dr.-Ing. Eugen Maier – Dr.-Ing. Eckhard Wolf
Pischekstraße 19 - 7000 Stuttgart 1 ·

A 12 539